# FASCICULE DE BREVET EUROPEEN

(11) **EP 3 084 507 B1**
(45) Date de publication et mention de la délivrance du brevet: **08.11.2017**
(21) Numéro de dépôt: 14806644.2
(22) Date de dépôt: 04.12.2014
(51) Int. Cl.: G02B 27/00, G02B 13/06, G02B 13/14, G02B 27/10, G02B 17/08, G02B 13/08

(54) **MODULE OPTIQUE D'IMAGERIE A CHAMP HYPER-HEMISPHERIQUE ET DISTORSION CONTROLEE, COMPATIBLE D'UN ENVIRONNEMENT EXTERIEUR**
OPTISCHES BILDGEBUNGSMODUL MIT HYPER-HEMISPHÄRISCHEM FELD UND KONTROLLIERTER VERZERRUNG SOWIE KOMPATIBILITÄT MIT EINER EXTERNEN UMGEBUNG
OPTICAL IMAGING MODULE HAVING A HYPER-HEMISPHERICAL FIELD AND CONTROLLED DISTORTION AND COMPATIBLE WITH AN OUTSIDE ENVIRONMENT

(30) Priorité: 20.12.2013 FR 1303027
(43) Date de publication de la demande: 26.10.2016
(73) Titulaire: THALES, 92400 Courbevoie (FR)
(72) Inventeur: ANTIER, Catherine, 78995 Elancourt (FR); MIDAVAINE, Thierry, 75006 Paris (FR)
(74) Mandataire: Henriot, Marie-Pierre
(86) Numéro de dépôt international: PCT/EP2014/076581
(87) Numéro de publication internationale: WO 2015/091002

(56) Documents cités:
- EP-A1- 2 163 933
- EP-A1- 2 172 798
- FR-A1- 2 826 221
- US-A- 6 115 193
- R. ANDREW HICKS: "Designing a mirror to realize a given projection", JOURNAL OF THE OPTICAL SOCIETY OF AMERICA A, vol. 22, no. 2, 1 janvier 2005 (2005-01-01), page 323, XP055065814, ISSN: 1084-7529, DOI: 10.1364/JOSAA.22.000323

## Description

Le domaine de l'invention est celui des modules optiques d'imagerie à champ hyper-hémisphérique avec un composant de tête mono-pupille.

On recherche un module optique d'imagerie répondant aux exigences suivantes :
- champ hyper-hémisphérique à visée verticale,
- permettant de réaliser une optique à focale variable dans le champ, de sorte que la résolution radiale du système varie dans le champ d'un facteur supérieur à 2 et soit minimale au voisinage du champ horizontal, de manière à mieux voir les détails autour de l'horizon tout en voyant le reste du champ,
- compatible d'une utilisation en environnement extérieur : pluie, ...,
- compatible d'une utilisation dans un système de forte ouverture typiquement supérieure à f/3 (il s'agit là de l'ouverture définie par le nombre d'ouverture N dans l'expression f/N, avec N=1/(2xsinα) où α est le ½ angle au sommet des faisceaux focalisant en un point donné du détecteur ; on a ici N<3) et pouvant être employé dans une architecture compacte multi spectrale.

Parmi les différents systèmes optroniques existants, on peut citer les systèmes :
- à lentille en tête,
- à dôme et miroir convexe en tête,
- à élément de tête solide à face d'entrée convexe réfractive suivie d'un miroir primaire concave ou convexe,
- à élément de tête solide à face d'entrée réfractive conique.

Classiquement pour les systèmes à lentille en tête, les optiques à champ hyper-hémisphérique sont des optiques réfractives de type « fish-eye » comprenant un groupe de tête divergent et un groupe de reprise d'image généralement constitué d'un groupe intermédiaire rejetant l'image au loin, associé à un groupe arrière de focalisation. De tels systèmes sont par exemple décrits dans les documents US 3 737 214 de 1973, et US 7 173 776 de 2007. Le diaphragme d'ouverture aussi désigné stop peut être positionné de façon à obtenir une optique télécentrique comme montré par exemple dans le document US 7 554 753.

Certaines lentilles peuvent permettre d'obtenir une résolution radiale variable dans le champ (exemple : brevet FR 2 826 221). On ne connaît d'ailleurs pas de système ayant une optique à focale variable dans le champ autre qu'à éléments dioptriques en tête.

Dans tous les systèmes à lentille en tête, pour obtenir une visée verticale vers le zénith, le composant de tête a une surface dont les plans tangents sont proches de l'horizontale, d'où une compatibilité limitée avec une utilisation en environnement extérieur en cas d'intempéries, les gouttes de pluie perturbant notablement l'image à cause de la petite dimension de la pupille, semblable à celle de la goutte d'eau.

Certaines optiques à champ hyper-hémisphérique utilisent en tête un miroir. Dans ce cas, pour une utilisation en environnement extérieur le système doit posséder à l'avant de ce miroir un dôme de protection, qui augmente l'encombrement et le coût, en particulier lorsque le dôme est en verre ou en saphir, et qui fragilise le système si le dôme est de faible épaisseur ou bien en matériau tendre, en plastique par exemple. Ce type d'architecture à dôme et miroir convexe, est principalement utilisé à l'intérieur pour la surveillance de magasins ou en environnement extérieur à visée verticale vers le sol pour la surveillance de rues, ce qui permet au dôme de fermeture d'être protégé des intempéries directes. En revanche, dans le cas d'une visée verticale vers le zénith à l'extérieur, ce type de système est aussi voire plus fragilisé qu'un fish-eye classique.

Pour pallier cet inconvénient, dans le cas d'un champ annulaire d'élévation typique de 40° (hauteur de champ de 40°) en vision panoramique (largeur de champ de 360°), on peut utiliser un groupe de tête solide mono ou bi-éléments, à face d'entrée convexe réfractive suivie d'un miroir primaire concave permettant de faire converger les faisceaux, généralement vers un second miroir placé au centre de la face réfractive d'entrée, ce qui permet de gagner en compacité. Ce groupe mixte réfractif/réflectif peut être constitué d'une « lentille » unique ou bien d'un doublet comme décrit dans le brevet US 2013/0057971. Ces systèmes à élément de tête solide à face d'entrée convexe réfractive suivie d'un miroir primaire concave ont l'inconvénient d'avoir un champ limité en élévation. De plus, dans le cas d'une visée verticale vers le zénith, la surface d'entrée reste proche de l'horizontale sur sa plus grande zone, ce qui ne résout pas le problème des intempéries lors d'une utilisation en extérieur.

Les systèmes à élément de tête solide à face d'entrée convexe réfractive suivie d'un miroir primaire convexe permettent d'obtenir un grand champ en élévation positive et négative, ce qui fait qu'ils sont en particulier utilisés lorsque l'on cherche à adresser un champ omnidirectionnel. Dans ce cas, afin d'adresser un grand champ, on doit utiliser une face d'entrée fortement convexe quasi ou hyper hémisphérique couvrant la plupart de l'avant et des côtés du solide, l'arrière étant constitué principalement du miroir primaire fortement convexe ; un tel exemple est décrit dans le brevet US 6 449 103.

Le plus souvent, la face d'entrée est très inclinée sur la majeure partie de sa surface, ce qui rend ce type de composant compatible d'une utilisation en extérieur en cas d'intempéries. En revanche, la réalisation du composant de tête est délicate, à cause de la forme fortement convexe et asphérique de la face d'entrée. C'est pourquoi ce type de composant est principalement réalisé par moulage, en premier lieu de plastique, ce qui limite principalement son utilisation aux composants de petite dimension (typiquement inférieure à 50 mm) si l'on souhaite obtenir une qualité optique de niveau imagerie.

Enfin, les systèmes à élément de tête solide à face d'entrée réfractive conique permettent d'accéder à un grand champ en élévation, mais sont peu utilisés en imagerie qui requiert une bonne qualité optique, étant donné que certains champs attaquent la face d'entrée avec un grand angle d'incidence, ce qui nécessite à l'arrière une bonne correction des aberrations. Ils sont surtout utilisés comme collecteur de flux, par exemple dans le cas d'un détecteur d'alerte laser à optique grand champ constituée d'un tronc de cône réfractif limité par 2 miroirs plans, le miroir M1 ayant une zone centrale recevant les faisceaux après réfraction seule par le tronc de cône, ou réfraction suivie d'une réflexion par M1 suivi de M2, ou par M2 seul, et comportant un détecteur dans cette zone centrale (brevet CA 2 087 467 de 1993).

**Un exemple de système d'imagerie à élément de tête solide, à champ d'entrée hyper-hémisphérique est décrit dans le document** EP 2 163 933**.**

En conséquence, il demeure à ce jour un besoin pour un système donnant simultanément satisfaction à l'ensemble des exigences précitées, en termes de champ hyper-hémisphérique à visée verticale, d'optique à focale variable dans le champ, d'utilisation en environnement extérieur et dans un système de forte ouverture, et pouvant être employé dans une architecture compacte multi spectrale.

La solution apportée est constituée d'un module d'imagerie comportant :
- un composant de tête mono-pupille quasi afocal au voisinage du champ de rayon angulaire 90°, associé à
- un correcteur d'aberrations assurant également le transport de l'image et de la pupille, en sortie duquel se trouve
- un objectif de focalisation apte à corriger les aberrations de champ qui restent en sortie du correcteur, en particulier des aberrations de courbure de champ et d'astigmatisme, et apte à focaliser les rayons issus de la scène à imager vers
- un détecteur.

Il comporte également un diaphragme d'ouverture situé entre le correcteur d'aberrations et l'objectif de focalisation.

Plus précisément l'invention a pour objet un module optique d'imagerie ayant un axe optique et comportant sur cet axe optique :
- un composant de tête mono-pupille à champ d'entrée hyper-hémisphérique
   ∘ à surface d'entrée réfractive et
   ∘ face de sortie concave vue de l'extérieur du composant, à zone centrale (incluant l'axe optique) réfractive et zone périphérique réflective désignée miroir primaire et,
   ∘ comportant un miroir secondaire à zone utile prédéterminée,
- associé à un correcteur optique d'aberrations en sortie duquel se trouve
- un objectif de focalisation sur
- un détecteur.

Il est principalement caractérisé en ce que :
- le composant de tête est :
   - quasi afocal au voisinage du champ de rayon angulaire 90°,
   - sa surface d'entrée est une surface de révolution à génératrice droite inclinée sur l'axe optique d'un angle inférieur à 30° (c'est-à-dire une surface d'entrée cylindrique ou conique de ½ angle au sommet inférieur à 30°), et
   - le miroir secondaire est asphérique à focale locale spatialement variable sur la zone utile avec une puissance locale maximale pour une partie de cette zone utilisée par un champ de rayon angulaire 90° et une puissance locale minimale inférieure d'au moins un facteur 2 pour une partie de cette zone utilisée par un champ de rayon angulaire <20° (c'est-à-dire vers l'intérieur de la zone utile),
- le correcteur d'aberrations comporte au moins une lentille asphérique,
- et en ce que le module optique comporte un diaphragme d'ouverture situé entre le correcteur d'aberrations et l'objectif de focalisation.

On obtient ainsi un module optique d'imagerie à champ hyper-hémisphérique et à distorsion contrôlée permettant des variations de résolution radiale d'un facteur supérieur à 2 dans le champ, comportant un composant de tête mono-pupille solide réfractif/réflectif, à face d'entrée de révolution à génératrice droite quasi-parallèle à l'axe optique, et dont la face du dessus est réflective et forme un miroir secondaire asphérique à coefficients pairs et impairs, ce composant étant associé à un correcteur d'aberrations en sortie duquel se trouve le diaphragme d'ouverture (stop).

La solution apportée permet de résoudre le problème posé :
- elle est compatible d'un champ hyper-hémisphérique à visée verticale, avec une zone morte centrale éventuelle mais limitée ;
- elle est compatible d'une utilisation en environnement extérieur, grâce à une face d'entrée quasi verticale voire rentrante, permettant un bon ruissellement des gouttes de pluie, qui peut être améliorée par l'emploi périodique d'un traitement de surface adapté ; par ailleurs, la surface d'entrée à génératrice droite facilite l'emploi éventuel d'un dispositif de nettoyage motorisé de type essuie-glace ;
- le composant de tête permet de réaliser une optique à focale variable dans le champ, de sorte que la résolution radiale du module d'imagerie varie dans le champ d'un facteur supérieur à 2 et est maximale au voisinage du champ horizontal ;
- la plupart des fonctions optiques du composant de tête étant réalisées par réflexion, celui-ci est compatible d'une utilisation multi spectrale, à condition de choisir un matériau transparent dans les différentes bandes d'utilisation. Il est plus robuste qu'un composant de tête comportant des miroirs et un dôme ;
- comme détaillé plus loin, le correcteur d'aberrations rend le module compatible d'une optique de qualité d'imagerie, même en cas de forte ouverture ;
- comme détaillé plus loin, le correcteur d'aberrations permet aussi de rejeter le stop à l'arrière, et rend ainsi le module compatible d'une architecture multivoies à diaphragmes d'ouverture spécifiques à chaque voie. En effet, dans ce type d'architecture, il est nécessaire de rejeter le stop à l'arrière du ou des séparateurs de voies, c'est-à-dire loin derrière le composant de tête.

La surface d'entrée a typiquement un ½ angle au sommet inférieur à 5°.

Selon une caractéristique de l'invention, le correcteur d'aberrations comporte une unique lentille asphérique, le module d'imagerie ayant de préférence une ouverture typique inférieure à f/5 (N>5) au voisinage du champ de rayon angulaire 90° et possédant un unique diaphragme d'ouverture (quel que soit le nombre de voies) qui est situé directement derrière le correcteur d'aberrations.

Selon une autre caractéristique de l'invention, le correcteur d'aberrations comporte trois lentilles asphériques, une première constituée d'un ménisque à face d'entrée convexe, une deuxième constituée d'un ménisque à face d'entrée concave et une troisième constituée d'une lentille de conjugaison, et le module d'imagerie ayant de préférence une ouverture typique supérieure à f/2 (N<2) au voisinage du champ de rayon angulaire 90° et/ou possédant dans le cas multivoies, des diaphragmes d'ouverture spécifiques à chaque voie situés à l'arrière du séparateur de voies.

Avantageusement, le module optique d'imagerie comporte en sortie du correcteur d'aberrations, un séparateur de voies optiques, avec en sortie, un objectif de focalisation et un détecteur par voie optique, chaque objectif de focalisation comportant éventuellement un filtre spectral.

Le détecteur est généralement matriciel ; on peut utiliser une barrette de photo détecteurs notamment dans le domaine IR3.

D'autres caractéristiques et avantages de l'invention apparaîtront à la lecture de la description détaillée qui suit, faite à titre d'exemple non limitatif et en référence aux dessins annexés dans lesquels :
la figure 1 a représente schématiquement un exemple de premier mode de réalisation d'un module optique d'imagerie à deux voies selon l'invention, vu en coupe avec une variante à trois voies en figure 1b,
les figures 2 représentent schématiquement un exemple de deuxième mode de réalisation d'un module optique d'imagerie monovoie selon l'invention, vu en coupe avec pour le composant de tête, une surface d'entrée cylindrique (fig 2a), une surface d'entrée conique (fig 2b), une surface d'entrée conique inversée (fig 2c),
la figure 3 montre la variation spatiale de la puissance locale du miroir secondaire dans le matériau en fonction de la distance à l'axe optique (fig 3a) ainsi que celle de la focale locale du module d'imagerie (fig 3b) en fonction de la direction du champ objet.

D'une figure à l'autre, les mêmes éléments sont repérés par les mêmes références.

Dans la suite de la description, les expressions « vertical » « horizontal », « au-dessus » sont utilisées en référence à l'orientation des figures décrites, l'axe vertical étant l'axe zz', le plan horizontal étant perpendiculaire à zz'. Dans la mesure où le dispositif peut être positionné selon d'autres orientations, la terminologie directionnelle est indiquée à titre d'illustration et n'est pas limitative.

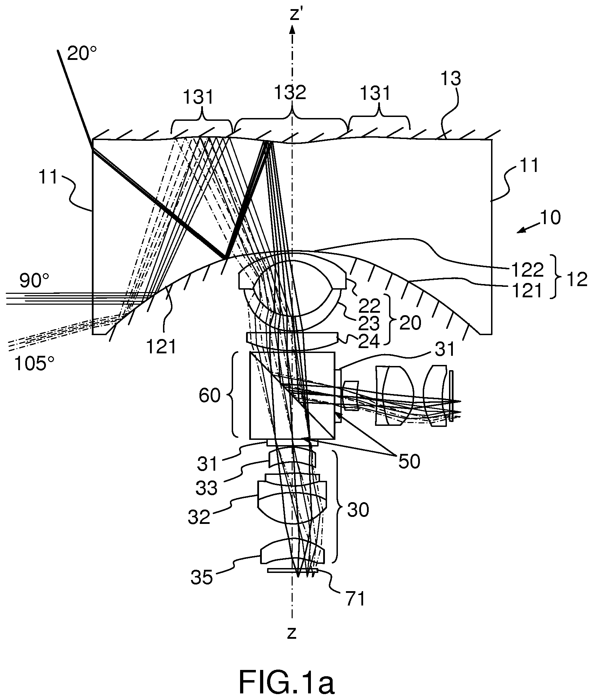

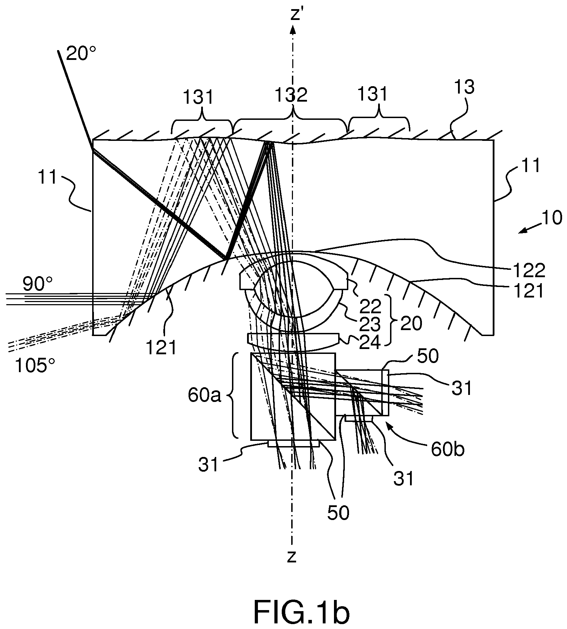

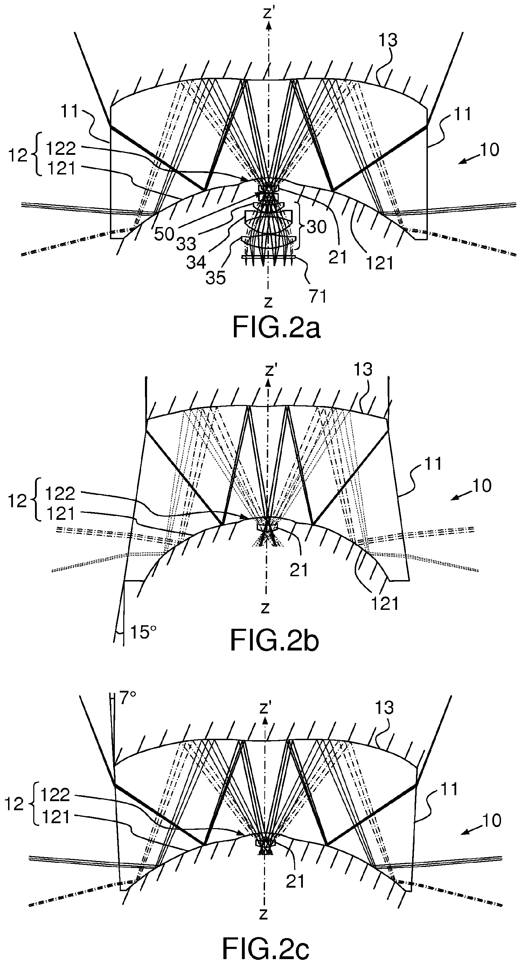

L'invention a pour objet un module optique d'imagerie ayant un axe optique vertical pour une visée verticale vers le zénith, c'est-à-dire selon zz' dont des exemples sont décrits en relation avec les figures 1 et 2. Il comporte sur cet axe optique les éléments optique suivants.

Un composant de tête 10 mono-pupille à champ hyper-hémisphérique par exemple de l'ordre de 200° à 220°, quasi afocal au voisinage du champ de rayon angulaire 90° (c'est-à-dire variant typiquement entre 90° ± 2°). Le composant est quasi afocal en ce sens que les images sagittale et tangentielle d'un objet situé au voisinage de ce champ horizontal sont l'une réelle et l'autre virtuelle. Il est mono pupille en ce sens que toutes les voies optiques passent par la même pupille en sortie du composant de tête.

Sa surface d'entrée 11 réfractive est une surface de révolution à génératrice droite inclinée sur l'axe optique d'un angle inférieur à 30°.

Sa face de sortie 12 est concave vue de l'extérieur du composant avec pour les rayons provenant de la face d'entrée 11 et transitant dans le composant 10 :
- une zone centrale 122 réfractive et
- une zone périphérique 121 réflective désignée miroir primaire.

Ces deux zones peuvent être constituées de deux surfaces jointives de rayons de courbure différents avec dans ce cas, la zone périphérique 121 asphérique et la zone centrale 122 sphérique comme on peut le voir sur les figures 2a, 2b et 2c, ou d'une unique surface définie par une même fonction géométrique le plus souvent asphérique comme montré figures 1 a et 1b.

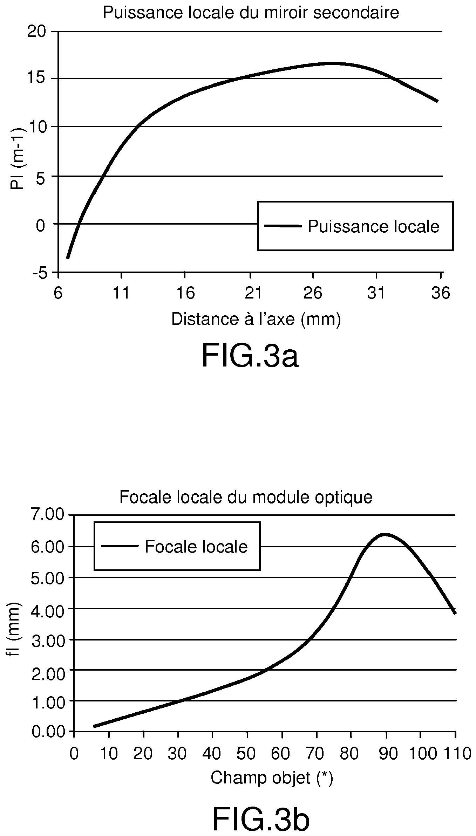

Le composant de tête comporte un miroir secondaire 13 à zone utile (c'est-à-dire réfléchissante) prédéterminée comportant une zone utile intérieure 132 et une zone utile extérieure 131. La zone utile intérieure 132 peut exclure le centre car celui-ci peut présenter un point de rebroussement ; elle correspond alors à un champ de vue annulaire. La zone utile est asphérique à focale spatialement variable avec une puissance locale maximale formant une courbe en cloche sur la zone utile extérieure 131 et inférieure d'au moins un facteur 2 (par rapport à cette puissance maximale) vers l'intérieur de la zone utile intérieure 132, de manière à ce que la résolution radiale soit minimale à l'horizon ; la puissance locale varie continûment mais pas linéairement en fonction du champ objet ; comme illustré figure 3, elle présente un maximum correspondant à la zone utilisée par le champ horizontal et un minimum correspondant à la zone utilisée par le champ vertical ou quasi-vertical (=de rayon angulaire <20°), c'est-à-dire vers l'intérieur de la zone intérieure 132. Cela permet au module d'imagerie de posséder une focale locale variant d'un facteur supérieur à 2 dans le champ. La focale locale fl est définie par l'expression fl(θ) = dy/dθr, dans laquelle dy est le champ image élémentaire correspondant à un champ objet élémentaire dθr d'orientation radiale et centré sur le champ de rayon angulaire θ ; la puissance locale est Pl(θ) =1/fl(θ).

Ce composant de tête est associé à un correcteur d'aberrations 20 qui comporte au moins une lentille asphérique. Mais il reste encore d'importantes aberrations de champ en sortie du correcteur d'aberrations, en particulier de la courbure de champ et de l'astigmatisme. Celles-ci sont corrigées dans un objectif de focalisation 30 situé à l'arrière du stop 50, de même que les aberrations d'ouverture résiduelles.

En sortie du correcteur optique 20 d'aberrations se trouve donc l'objectif de focalisation 30 apte à focaliser les rayons issus de la scène à imager dans un plan focal où est placé un détecteur matriciel 40. On peut aussi utiliser comme détecteur 40, une barrette de photo détecteurs notamment dans le domaine IR3.

Le module optique comporte un diaphragme d'ouverture 50 (ou stop) situé entre le correcteur d'aberrations 20 et l'objectif de focalisation 30.

Tous ces éléments optiques sont centrés : ils sont à symétrie radiale autour de l'axe optique zz'.

On décrit en relation avec la figure 1 a un exemple de premier mode de réalisation d'un module d'imagerie selon l'invention.

La surface d'entrée 11 du composant de tête est une surface de révolution à génératrice droite inclinée sur l'axe optique d'un angle nul. Dit autrement il s'agit d'une surface cylindrique dont les faces sont parallèles à l'axe optique zz' : les faces sont verticales.

La face de sortie 12 du composant de tête est concave vue de l'extérieur avec pour les rayons provenant de la face d'entrée : une zone centrale 122 réfractive et une zone périphérique 121 réflective formant le miroir primaire. Cette zone périphérique 121 est de préférence asphérique pour améliorer la qualité optique des images.

Dans cet exemple, pour être compatible d'une forte ouverture (il s'agit là de l'ouverture définie par le nombre d'ouverture N dans l'expression f/N, avec N=1/(2xsinα) où α est le ½ angle au sommet des faisceaux focalisant en un point donné du détecteur ; on a typiquement ici N<2) le correcteur d'aberrations 20 est constitué d'un groupe de 3 lentilles :
- un premier ménisque 22 le plus souvent asphérique, à face d'entrée convexe, suivi
- d'un deuxième ménisque 23 à face d'entrée concave, suivi
- d'une lentille de conjugaison 24.

Dans ce cas, le module d'imagerie a donc une ouverture typique supérieure à f/2 (N<2) au voisinage du champ de rayon angulaire 90° et/ou possède, dans le cas multivoies, des diaphragmes d'ouverture spécifiques à chaque voie situés à l'arrière du séparateur de voies.

Dans cet exemple le module d'imagerie est à deux voies. A cet effet, il est en outre muni d'un séparateur 60 de voies tel qu'un ensemble de 2 prismes avec réflexion à 45° sur l'une des voies (cas représenté sur la figure 1a) ou tel qu'un ensemble de 2 prismes avec réflexion à environ 30° suivie d'une réflexion totale ou tel qu'une lame séparatrice (éventuellement amovible), avec pour chacune des deux voies séparées :
- un objectif de focalisation 30 lui-même éventuellement équipé d'un filtre spectral (qui peut être situé près ou non du séparateur), et qui comprend : un ménisque 33 le plus souvent asphérique, un triplet 32 et une lentille de champ 35 le plus souvent asphérique ;
- un stop 50 rejeté à l'arrière du séparateur pour s'adapter à l'ouverture de la voie correspondante, et porté par un diaphragme iris dans le cas d'une ouverture variable, ou bien par la face arrière du séparateur (cas de la figure 1a) ou bien par le filtre spectral 31 qui peut être légèrement en retrait du séparateur, par exemple si ce filtre spectral porte un filtre de phase et/ou s'il est mobile et comporte plusieurs positions correspondant à différentes ouvertures discrètes.
   Dans le cas où l'une des voies possède une ouverture importante (typiquement supérieure à f/3, c'est-à-dire N<3), la profondeur de foyer pourra être augmentée par l'emploi d'un filtre de phase, de préférence à symétrie de révolution, afin de favoriser l'obtention d'une qualité d'image uniforme sur tout le champ. Ce filtre sera placé au niveau du diaphragme d'ouverture et pourra être situé par exemple sur l'une des faces du filtre spectral lorsqu'un tel filtre est placé dans la voie, ou bien par exemple en face arrière du séparateur lorsqu'il y en a un. Dans ce dernier cas, la face arrière du séparateur doit être en contact avec le milieu ambiant (air ou azote habituellement).
- un détecteur (Les détecteurs ne sont pas représentés sur les figures pour ne pas les surcharger, mais le hublot 71 du détecteur est montré figure 1 a ainsi que figure 2a).

Selon une variante de ce mode de réalisation, illustrée figure 1b, deux séparateurs de voies équipent le module d'imagerie à trois voies cette fois : un premier séparateur 60a placé comme dans l'exemple de la figure 1 a, le 2è séparateur 60b étant situé sur une des 2 sorties du premier séparateur, selon une orientation quelconque dans ce plan de sortie, de manière à séparer deux voies reçues en entrée. Là aussi, chaque voie séparée est munie d'un objectif de focalisation lui-même équipé d'un filtre spectral placé sur le stop qui est rejeté à l'arrière pour s'adapter à l'ouverture de la voie correspondante. L'objectif de focalisation n'est pas représenté sur cette figure, ni sur les figures 2b et 2c.

Sur ces figures 1, des rayons sont montrés sur seulement une moitié de la figure pour ne pas la surcharger, mais bien sûr le composant de tête n'est pas limité à ces rayons.

Dans un exemple d'autre mode de réalisation montré figure 2a, le module d'imagerie est monovoie. La surface d'entrée 11 du composant de tête est également cylindrique, à faces verticales.

La face de sortie 12 du composant de tête est constituée d'une zone centrale 122 réfractive et sphérique, et d'une zone extérieure 121 réflective asphérique formant le miroir primaire.

Dans cet exemple, le correcteur d'aberrations comporte une unique lentille 21 asphérique correctrice, et le stop 50 de petit diamètre est situé à proximité de l'arrière du correcteur. Le module d'imagerie a une ouverture typique inférieure à f/5 (N>5) au voisinage du champ de rayon angulaire 90° et possède un unique diaphragme d'ouverture (quel que soit le nombre de voies) qui est situé directement derrière le correcteur d'aberrations.

L'objectif de focalisation 30 éventuellement équipé d'un filtre spectral placé sur le stop 50 comprend : un ménisque 33 généralement sphérique, un doublet 34 et une lentille de champ 35 le plus souvent asphérique.

Selon une première variante de ce deuxième mode de réalisation, montrée figure 2b, la surface d'entrée 11 du composant de tête est conique c'est-à-dire à génératrice inclinée sur l'axe optique d'un angle inférieur à 30° et non nul, en l'occurrence d'un angle de 15° comme indiqué sur la figure (le sommet de cet angle d'inclinaison sur l'axe optique zz' pointe vers z'). Cela permet d'obtenir une visée zénithale performante.

Selon une deuxième variante de ce deuxième mode de réalisation, montrée figure 2c, la surface d'entrée 11 du composant de tête est conique à cône inversé par rapport à l'exemple précédent ; elle est inclinée sur l'axe optique d'un angle de 7° comme indiqué sur la figure (le sommet de cet angle d'inclinaison sur l'axe optique zz' pointe vers z). Cette configuration est avantageuse pour une utilisation en zone d'intempéries (pluie, neige, etc.).

Bien sûr d'autres exemples de ce deuxième mode de réalisation peuvent être multi voies en étant équipés d'un ou plusieurs séparateurs de voies, comme on l'a déjà vu avec les figures 1.

Pour le composant de tête 10 on peut utiliser divers matériaux. Pour les applications d'Imagerie Visible (0.4-0.65 µm) et/ou d'Imagerie Proche Infra-rouge (NIR 0.65-1 µm) et/ou d'Imagerie Infra-rouge SWIR (1.5-1.7 µm), et/ou d'Imagerie NIR+SWIR (1µm-1.7 µm), on peut utiliser comme matériau du verre optique standard désigné sous cette appellation générique ou sous sa marque commerciale Schott N-BK7 ou N-BK7HT de préférence dans le cas où la voie SWIR est utilisée, sans que la généralité de la référence en soit modifiée. Ce verre a l'avantage d'avoir un faible coût, d'exister en standard en grande épaisseur, et d'être relativement dur et peu sensible aux agents chimiques. Parmi les autres matériaux candidats, on peut citer en particulier le verre désigné sous sa marque commerciale Schott N-SK2 ou équivalent ainsi que la Silice et les verres moulables.

Pour les applications multi spectrales plus large bande, on peut en particulier utiliser comme matériau du composant de tête du ZnS multi spectral (transparent du Visible à l'Infrarouge bande III), de l'Alon (matériau dur transparent du Visible à l'Infrarouge bande II), du Silicium (transparent en bandes SWIR et IR II) des matériaux en cours de développement comme les céramiques (matériaux durs transparents du Proche Infra-rouge à l'Infrarouge bande III).

La surface d'entrée 11 est avantageusement recouverte d'un traitement hydrophobe.

On trouvera ci-dessous des exemples de caractéristiques optiques qui peuvent être obtenues pour une application de veille panoramique :

| **Exemples de caractéristiques optiques pouvant être obtenues** | **Voie NIR** | **Voie VIS** | **Voie SWIR n°1** | **Voie SWIR n°2** |
|---|---|---|---|---|
| Bande spectrale (nm) | 650-1000 | 400-650 | 1000-1700 | 1000-1700 |
| Champ optique objet (°) | 220 | 220 | 220 | 220 |
| Angles de site non vignettés (°) | +75/-20 | +75/-20 | +75/-20 | +75/-20 |
| ON champ horizontal (rayon angulaire champ optique: 90°) | 1.9 | 3.8 | 3.8 | 3.8 |

ON désignant Ouverture Numérique.
Champ horizontal correspond à un angle de site nul, c'est-à-dire au plan objet horizontal.

Concernant la focale spatialement variable du miroir secondaire 13, on peut par exemple obtenir avec les caractéristiques ci-dessus, comme illustré figure 3a : une puissance locale dans le matériau de 1,8 m⁻¹ pour un champ à 30° de l'axe, variant jusqu'à 16.2 m⁻¹ pour un champ à 90° de l'axe.

Au niveau du module optique, on peut alors obtenir, comme illustré figure 3b : une focale locale de 1 mm pour un champ à 30° de l'axe, variant jusqu'à 6.4 mm pour un champ à 90° de l'axe.

| **Exemples de caractéristiques optiques pouvant être obtenues** | | |
|---|---|---|
| Champ objet (°) | Puissance locale miroir secondaire (m-1) | Focale locale optique complète (mm) |
| 30 | 1.8 | 1.0 |
| 60 | 10.4 | 2.3 |
| 75 | 13.7 | 4.1 |
| 90 | 16.2 | 6.4 |
| 105 | 15.8 | 4.8 |

Les détecteurs matriciels suivants peuvent par exemple être associés aux optiques décrites ci-dessus, ce qui permet d'obtenir une résolution variable spatialement comme indiqué ci-dessous, qui suit les évolutions de la résolution tangentielle en optique panoramique.

| **Exemples de caractéristiques senseurs pouvant être obtenues** | Voie NIR | Voie VIS | Voie SWIR n°1 | Voie SWIR n°2 |
|---|---|---|---|---|
| Pas du pixel (µm) | 6.5 | 6.5 | 15 | 15 |
| Nombre de pixels du détecteur | 2560x2160 | 2560x2160 | 1280x1024 | 640x512 |
| Résolution radiale (mrad) champ horizontal | 1.0 | 1.0 | 2.3 | 4.3 |
| Résolution radiale maxi (mrad) à +/-15° de site | 1.6 | 1.6 | 3.7 | 6.7 |
| Résolution radiale (mrad) à + 30° de site | 2.8 | 2.8 | 6.5 | 11.9 |
| Résolution radiale (mrad) à + 60° de site | 6.6 | 6.6 | 15.1 | 27.7 |

La solution apportée est donc particulièrement adaptée à un système de surveillance terrestre bas coût, jour-nuit, monté sur véhicule.
❖ Le champ hyper-hémisphérique permet non seulement d'observer les menaces situées à l'avant, à l'arrière, sur les côtés et au-dessus du véhicule, mais aussi celles situées au pied de celui-ci (mines...). Un tel module d'imagerie est monobloc, ce qui rend son intégration sur véhicule plus aisée.
❖ Le module solide mixte réflectif/réfractif permet d'obtenir une compacité qui est bien supérieure à ce qu'on obtiendrait avec un fish-eye classique, et rend ainsi le module d'imagerie moins vulnérable aux menaces.
❖ Pour obtenir simultanément une bonne résolution, une distorsion contrôlée et une forte ouverture, on utilise un composant de tête de diamètre typique 100 à 125 mm et d'épaisseur totale typique 40 à 60 mm, compatible des dimensions de matériaux suffisamment durs pour être utilisés en extérieur, comme les verres optiques. Dans le cas de plus faible ouverture, le composant de tête, de diamètre typique de 60 à 80 mm et d'épaisseur totale typique 30 à 40 mm, est de plus aisément compatible d'une réalisation par moulage.
❖ La résolution est maximale pour les menaces les plus fréquentes, situées au voisinage de la ligne horizontale. Par ailleurs, les menaces situées à forte élévation, comme des fantassins placés en haut d'immeubles dans un combat de rues, sont aussi accessibles. De plus, ce type d'architecture est bien adapté à la détection d'alerte laser.
❖ La forme de la face d'entrée rend le dispositif particulièrement bien adapté à une utilisation tous temps.
❖ La possibilité d'obtenir une qualité d'imagerie avec une grande ouverture rend le système compatible d'une utilisation jour-nuit. En particulier, cela rend possible l'emploi d'un détecteur sans refroidissement liquide, ce qui en diminue le coût et en augmente la robustesse. Ce type d'architecture optique peut ainsi être employé par exemple avec des détecteurs matriciels Silicium faible bruit, InGaAs, IR Non refroidi.
❖ La compatibilité avec une optique multi-voies permet d'associer différentes voies d'imagerie présentant des informations complémentaires, auxquelles peut éventuellement s'ajouter une voie de détection d'alertes laser et/ou de départ de missile.
❖ La forme du composant de tête permet une réalisation relativement aisée par usinage, compatible de matières dures et utilisables en environnement extérieur, comme le verre ou certains matériaux infrarouges. La réalisation est simplifiée (et le coût diminué) dans le cas d'une face d'entrée cylindrique et d'une face arrière constituée d'une unique surface.

## Revendications

1. Module optique d'imagerie ayant un axe optique et comportant sur cet axe optique :
- un composant de tête (10) mono-pupille à champ d'entrée hyper-hémisphérique, quasi afocal au voisinage du champ de rayon angulaire 90°,
o à surface d'entrée (11) réfractive qui est une surface de révolution à génératrice droite inclinée sur l'axe optique d'un angle inférieur à 30°
∘ face de sortie (12) concave vue de l'extérieur du composant, à zone centrale (122) réfractive et zone périphérique (121) réflective désignée miroir primaire,
∘ et comportant un miroir secondaire (13) asphérique à zone utile prédéterminée,
- associé à un correcteur optique (20) d'aberrations en sortie duquel se trouve
- un objectif de focalisation (30) sur
- un détecteur (40),
- avec un diaphragme d'ouverture (50) situé entre le correcteur d'aberrations (20) et l'objectif de focalisation (30),
**caractérisé en ce que** :
- le miroir secondaire (13) est à focale locale spatialement variable sur la zone utile avec une puissance locale maximale pour une partie de cette zone utilisée par un champ de rayon angulaire 90° et une puissance locale minimale inférieure d'au moins un facteur 2 pour une partie de cette zone utilisée par un champ de rayon angulaire inférieur à 20°,
- le correcteur optique d'aberrations (20) comporte au moins une lentille asphérique.

2. Module optique d'imagerie selon la revendication précédente, **caractérisé en ce que** pour la surface d'entrée (11), l'inclinaison de la droite génératrice forme un ½ angle au sommet inférieur à 5°.

3. Module optique d'imagerie selon l'une des revendications précédentes, **caractérisé en ce que** le miroir secondaire (13) est à coefficients pairs et impairs.

4. Module optique d'imagerie selon l'une des revendications précédentes, **caractérisé en ce que** la zone utile du miroir secondaire (13) est annulaire.

5. Module optique d'imagerie selon l'une des revendications précédentes, **caractérisé en ce que** le miroir primaire (121) est asphérique et la zone centrale réfractive (122) de la face de sortie du composant est sphérique.

6. Module optique d'imagerie selon l'une des revendications 1 à 4, **caractérisé en ce que** le miroir primaire (121) et la zone réfractive (122) de la face de sortie du composant de tête correspondent à une surface définie par une même fonction géométrique.

7. Module optique d'imagerie selon l'une des revendications précédentes, **caractérisé en ce que** le correcteur d'aberrations (20) comporte une unique lentille asphérique (21).

8. Module optique d'imagerie selon la revendication 1, **caractérisé en ce que** le correcteur d'aberrations (20) comporte trois lentilles asphériques,
- une première (22) constituée d'un ménisque à face d'entrée convexe,
- une deuxième (23) constituée d'un ménisque à face d'entrée concave et
- une troisième (24) constituée d'une lentille de conjugaison.

9. Module optique d'imagerie selon l'une des revendications précédentes, **caractérisé en ce que** le détecteur est matriciel ou est une barrette de photo détecteurs.

10. Module optique d'imagerie selon l'une des revendications précédentes, **caractérisé en ce qu'**il comporte en sortie du correcteur d'aberrations (20) au moins un séparateur (60) de voies optiques, avec en sortie, un objectif de focalisation et un détecteur par voie optique.

11. Module optique d'imagerie selon l'une des revendications précédentes, **caractérisé en ce que** chaque objectif de focalisation comporte un filtre spectral (31).

12. Module optique d'imagerie selon l'une des revendications précédentes, **caractérisé en ce qu'**un filtre de phase à symétrie de révolution est placé au niveau du diaphragme d'ouverture (50).

13. Module optique d'imagerie selon l'une des revendications précédentes, **caractérisé en ce que** la (ou les) voie(s) optique(s) est (ou sont) dans le domaine Visible et/ou NIR et/ou SWIR.

## Patentansprüche

1. Optisches Bilderzeugungsmodul mit einer optischen Achse, das auf dieser optischen Achse Folgendes umfasst:
- eine Einzelpupillen-Kopfkomponente (10) mit hyper-hemisphärischem Eingangsfeld, quasi afokal in der Nachbarschaft des Strahlenfeldes mit einem Winkel von 90°,
∘ mit brechender Eingangsfläche (11), die eine Umdrehungsfläche mit gerader Mantellinie ist, auf der optischen Achse geneigt in einem Winkel kleiner als 30°;
∘ eine konkave Ausgangsfläche (12), von der Außenseite der Komponente betrachtet, mit einem brechenden zentralen Bereich (122) und einem reflektierenden peripheren Bereich (121), als Primärspiegel bezeichnet,
∘ und umfassend einen asphärischen Sekundärspiegel (13) mit vorbestimmtem Nutzbereich,
- assoziiert mit einem optischen Aberrationskorrektor (20), an dessen Ausgang sich Folgendes befindet:
- ein Fokussierobjektiv (30) auf
- einem Detektor (40),
- mit einer Öffnungsblende (50), die sich zwischen dem Aberrationskorrektor (20) und dem Fokussierobjektiv (30) befindet,
**dadurch gekennzeichnet, dass**:
- die Kopfkomponente (10)
- und der Sekundärspiegel (13) einen räumlich variablen lokalen Brennpunkt auf dem Nutzbereich mit einer maximalen lokalen Leistung für einen Teil dieses Bereichs hat, benutzt von einem Strahlenfeld mit einem Winkel von 90° und einer minimalen lokalen Leistung, die mindestens um einen Faktor 2 kleiner ist für einen Teil dieses Bereichs, der von einem Strahlenfeld mit einem Winkel kleiner als 20° benutzt wird,
- der optische Aberrationskorrektor (20) wenigstens eine asphärische Linse umfasst.

2. Optisches Bilderzeugungsmodul nach dem vorherigen Anspruch, **dadurch gekennzeichnet, dass** für die Eintrittsfläche (11) die Neigung der geraden Mantellinie einen halben Winkel mit einem Scheitelpunkt von kleiner als 5° bildet.

3. Optisches Bilderzeugungsmodul nach einem der vorherigen Ansprüche, **dadurch gekennzeichnet, dass** der Sekundärspiegel (13) gerade und ungerade Koeffizienten hat.

4. Optisches Bilderzeugungsmodul nach einem der vorherigen Ansprüche, **dadurch gekennzeichnet, dass** der Nutzbereich des Sekundärspiegels (13) ringförmig ist.

5. Optisches Bilderzeugungsmodul nach einem der vorherigen Ansprüche, **dadurch gekennzeichnet, dass** der Primärspiegel (121) asphärisch ist und der brechende zentrale Bereich (122) der Ausgangsfläche der Komponente sphärisch ist.

6. Optisches Bilderzeugungsmodul nach einem der Ansprüche 1 bis 4, **dadurch gekennzeichnet, dass** der Primärspiegel (121) und der brechende Bereich (122) der Ausgangsfläche der Kopfkomponente einer Oberfläche entsprechen, die durch eine selbe geometrische Funktion definiert wird.

7. Optisches Bilderzeugungsmodul nach einem der vorherigen Ansprüche, **dadurch gekennzeichnet, dass** der Aberrationskorrektor (20) eine einzige asphärische Linse (21) umfasst.

8. Optisches Bilderzeugungsmodul nach Anspruch 1, **dadurch gekennzeichnet, dass** der Aberrationskorrektor (20) drei asphärische Linsen umfasst,
- eine erste (22), die von einem Meniskus mit konvexer Eingangsfläche gebildet wird,
- eine zweite (23), die von einem Meniskus mit konkaver Eingangsfläche gebildet wird, und
- eine dritte (24), die von einer Konjugationslinse gebildet wird.

9. Optisches Bilderzeugungsmodul nach einem der vorherigen Ansprüche, **dadurch gekennzeichnet, dass** der Detektor ein Matrixdetektor oder ein lineares Array von Fotodetektoren ist.

10. Optisches Bilderzeugungsmodul nach einem der vorherigen Ansprüche, **dadurch gekennzeichnet, dass** es am Ausgang des Aberrationskorrektors (20) wenigstens einen Separator (60) von optischen Pfaden umfasst, am Ausgang mit einem Fokussierobjektiv und einem Detektor pro optischem Pfad.

11. Optisches Bilderzeugungsmodul nach einem der vorherigen Ansprüche, **dadurch gekennzeichnet, dass** jedes Fokussierobjektiv ein Spektralfilter (31) umfasst.

12. Optisches Bilderzeugungsmodul nach einem der vorherigen Ansprüche, **dadurch gekennzeichnet, dass** ein Phasenfilter mit Umdrehungssymmetrie an der Öffnungsblende (50) platziert ist.

13. Optisches Bilderzeugungsmodul nach einem der vorherigen Ansprüche, **dadurch gekennzeichnet, dass** die ein oder mehreren optischen Pfade im sichtbaren und/oder im NIR- und/oder SWIR-Bereich ist/sind.

## Claims

1. Optical imaging module having an optical axis and comprising on this optical axis:
- a single-pupil head component (10) having a hyper-hemispherical entrance field, quasi-afocal for fields of angular radius in the vicinity of 90°,
∘ having a refractive entrance surface (11) that is a surface of revolution having a straight generator inclined on the optical axis by an angle less than 30°
∘ concave exit face (12) seen from the exterior of the component, having a central refractive zone (122) and reflective peripheral zone (121) designated as primary mirror,
∘ and comprising an aspherical secondary mirror (13) having a predetermined useful zone,
- associated with an optical aberrations corrector (20) at the exit of which is located
- a focusing objective (30) on
- a detector (40),
- with an aperture stop (50) situated between the optical aberrations corrector (20) and the focusing objective (30),
**characterised in that**:
- the head component (10)
- and the secondary mirror (13) is for local focus varying spatially over the useful zone with a maximum local power for a part of this zone used by a field of 90° angular radius and a minimum local power lower by at least a factor of 2 for a part of this zone used by a field of angular radius less than 20°,
- the optical aberrations corrector (20) comprises at least one aspherical lens.

2. Optical imaging module according to the preceding claim, **characterised in that** for the entrance surface (11), the incline of the straight generator forms an apex ½ angle less than 5°.

3. Optical imaging module according to one of the preceding claims, **characterised in that** the secondary mirror (13) has even and odd coefficients.

4. Optical imaging module according to one of the preceding claims, **characterised in that** the useful zone of the secondary mirror (13) is annular.

5. Optical imaging module according to one of the preceding claims, **characterised in that** the primary mirror (121) is aspherical and the central refractive zone (122) of the exit face of the component is spherical.

6. Optical imaging module according to one of claims 1 to 4, **characterised in that** the primary mirror (121) and the refractive zone (122) of the exit face of the head component correspond to a surface defined by the same geometric function.

7. Optical imaging module according to one of the preceding claims, **characterised in that** the aberrations corrector (20) comprises a single aspherical lens (21).

8. Optical imaging module according to claim 1, **characterised in that** the aberrations corrector (20) comprises three aspherical lenses,
- a first (22) constituted of a meniscus with convex entrance face,
- a second (23) constituted of a meniscus with concave entrance face and
- a third (24) constituted of a conjugating lens.

9. Optical imaging module according to one of the preceding claims, **characterised in that** the detector is matrix-type or is a linear array of photodetectors.

10. Optical imaging module according to one of the preceding claims, **characterised in that** it comprises at the exit of the aberrations corrector (20) at least one optical path splitter (60) with at the exit, a focusing objective and a detector per optical path.

11. Optical imaging module according to one of the preceding claims, **characterised in that** each focusing objective comprises a spectral filter (31).

12. Optical imaging module according to one of the preceding claims, **characterised in that** a phase filter with rotational symmetry is placed at the aperture stop (50).

13. Optical imaging module according to one of the preceding claims, **characterised in that** the optical path(s) is (or are) in the visible and/or NIR and/or SWIR spectrum.
